# EUROPÄISCHE PATENTANMELDUNG

(11) **EP 1 956 063 A2**
(43) Veröffentlichungstag der Anmeldung: **13.08.2008**
(21) Anmeldenummer: 07022746.7
(22) Anmeldetag: 23.11.2007
(51) Int. Cl.: C09J 5/06, C09J 5/10

(54) **Verfahren zum Verkleben eines ersten Bauteils mit einem zweiten Bauteil**

(30) Priorität: 07.02.2007 DE 102007006881
(71) Anmelder: Henkel AG & Co. KGaA, 40589 Düsseldorf (DE); IFF GmbH, 85737 Ismaning (DE)
(72) Erfinder: Friese, Carsten, 40219 Düsseldorf (DE); Schönfeld, Rainer, 40221 Düsseldorf (DE); Kopannia, Siegfried, 47809 Krefeld (DE); Herold, Julius, 68723 Plankstadt (DE); Mazac, Karel, 86316 Friedberg (DE); Lammel, Christian, 85737 Ismaning (DE)

(57) **Zusammenfassung**

Verfahren zum Verkleben eines ersten Bauteils mit einem zweiten Bauteil, das einen Randbereich aufweist, mit dem überlappend das erste Bauteil verklebt wird, wobei man a) mindestens einen Körper aus einem Schmelzklebstoff so mit dem ersten Bauteil verklebt, dass er beim Verkleben des ersten Bauteils mit dem zweiten Bauteil in Kontakt mit dem Randbereich kommt, b) den Randbereich lokal an mindestens einer Stelle, an der beim Verkleben des ersten Bauteils der aufgebrachte Körper aus Schmelzklebstoff in Kontakt mit dem Randbereich kommt, mittelbar oder unmittelbar durch elektromagnetische Induktion auf eine Temperatur erwärmt, die oberhalb der Schmelztemperatur des Schmelzklebstoffs liegt, c) das erste Bauteil so mit dem Randbereich des zweiten Bauteils kontaktiert, dass der Körper des Schmelzklebstoffs in Kontakt mit der im Schritt b) erwärmten Stelle des Randbereichs kommt, so dass der Schmelzklebstoff an der Kontaktstelle mit dem Randbereich aufschmilzt und nach Abkühlen das erste Bauteil mit dem Randbereich des zweiten Bauteils verbindet, d) wobei man zusätzlich vor dem Schritt b) oder nach dem Schritt c) einen reaktiven Klebstoff so zwischen das erste und das zweite Bauteil einbringt, dass er das erste Bauteil mit dem Randbereich des zweiten Bauteils verbindet, und e) den reaktiven Klebstoff aushärtet oder aushärten lässt.

## Beschreibung

Die vorliegende Erfindung betrifft ein verbessertes Verfahren zum Verkleben eines ersten Bauteils mit einem zweiten Bauteil. Dabei wird das erste Bauteil mit Hilfe von 2 unterschiedlichen Klebstoffen mit dem zweiten Bauteil verklebt. Einer der Klebstoffe ist ein Schmelzklebstoff, mit dem das erste Bauteil auf dem zweiten Bauteil fixiert wird, bevor der zweite Klebstoff, der einen reaktiven Klebstoff darstellt, aushärtet und die endgültige Festigkeit der Verklebung bewirkt. Beispielsweise kann es sich bei dem ersten Bauteil um eine Scheibe für ein Fahrzeug oder ein Fahrzeugteil handeln, beispielsweise die Scheibe eines Schiebedachs oder eine Front- oder Heckscheibe. Die Erfindung ist hierauf jedoch nicht beschränkt.

Ein derartiges Verfahren ist beispielsweise aus EP 1 403 108 B1 bekannt. Die dort gemachten Ausführungen treffen auch auf die vorliegende Erfindung zu:
"Die Verglasung von Fahrzeugen ist mit einer Vielzahl verfahrenstechnischer Probleme behaftet. Typischerweise werden auf Polyurethanen basierende Klebedichtungsmassen zur Verglasung von Fahrzeugen verwendet, welche eine relativ lange Aushärtungszeit benötigen. Während dieser Aushärtungszeit ist die eingesetzte Scheibe aufgrund des gewünschten kontinuierlichen Weitertransports auf einer Fertigungsstrasse ständigen Vibrationen und Erschütterungen ausgesetzt, welche zum Verrutschen der Scheibe führen können. Eine derartige Veränderung der Position führt zu einer ungenauen Passung, wodurch sich Fehler in den Klebedichtfugen ergeben sowie Undichtigkeiten entstehen können. Zudem kann ein Verrutschen der Scheibe aus ihrer beabsichtigen Position den umlaufend verbleibenden Spalt zur Karosserie zumindest stellenweise derart verkleinern, dass ein eventuelles Anbringen einer umlaufenden Dichtlippe unmöglich wird. Darüber hinaus kann ein Verrutschen der Scheibe auch einen Stabilitätsverlust des gesamten Fahrzeuges bewirken, da Fehler der als tragendes Bauteil fungierenden Verglasung sich auf die Statik des Fahrzeugs auswirken. Überdies führt insbesondere partiell konzentrierte Druckbelastung der Scheibe während des Aushärtungsprozesses zu ungleichmäßig ausgehärteten Klebeflächen, was in einem extremen Szenario bis hin zu stellenweise seitlich hervorquellender Klebedichtungsmasse führen kann. Aus diesen Gründen sind eine Vielzahl von Anstrengungen unternommen worden, diese genannten Probleme zu lösen oder zu umgehen."

Das genannte Dokument EP 1 403 108 B1 zitiert dann einleitend im Stand der Technik bekannte Vorschläge, diese Probleme zu lösen. Hierauf aufbauend schlägt EP 1 403 108 B1 das folgende verbesserte Verfahren zum Befestigen einer Verglasung an einem Tragrahmen vor, die insbesondere bei der Direktverglasung von Fahrzeugen anwendbar ist:
"Hierbei kommt eine erste, strangförmig den Randbereich der Scheibenhauptfläche umlaufende, bevorzugterweise auf Polyurethanen basierende Klebedichtungsmasse zum Einsatz. Diese kann wahlweise vor dem Einsetzen der Scheibe in den Tragrahmen auf die Scheibe selbst oder auf den Tragrahmen aufgetragen werden. Zusätzlich wird vor dem Einsetzen der Verglasung eine weitere, zweite Klebemasse wenigstens in einem Teilbereich des Gesamtumfangs des genannten Randbereichs wahlweise auf die Scheibe oder auf den Tragrahmen appliziert. Idealerweise werden die erste Klebedichtungsmasse und die zweite Klebemasse derart aufgetragen, dass sie nach dem Einsetzen der Scheibe in den Tragrahmen voneinander räumlich getrennt sind, um etwaige Kompatibilitätsprobleme von vornherein zu vermeiden. Die zweite Klebemasse ist hierbei schneller härtbar als die erste Klebedichtungsmasse. Unter "schneller härtbar" sind hierbei insbesondere Aushärtungszeiten von weniger als 5 Minuten zu verstehen, bevorzugterweise von 0,5 Sekunden bis 60 Sekunden, idealerweise von 0,5 Sekunden bis 5 Sekunden, wobei die Aushärtung der zweiten Klebemasse durch einen kontrollierbaren äusseren Energieeinfluss initiiert werden kann. Das untere Zeitlimit ist hierbei lediglich über Randbedingungen des Verfahrens definiert und kann beliebig klein werden in Abhängigkeit von der verwendeten Klebemasse, der Intensität des Energieeinflusses, etc. In jedem Falle wird die Scheibe zunächst durch die im Vergleich zur ersten Klebedichtungsmasse schnelle und selektive Härtung lediglich der zweiten Klebemasse in der gewünschten Lage fixiert. Dadurch wird ein störungsfreies und homogenes Aushärten der ersten Klebedichtungsmasse gewährleistet. An die Dauerhaftigkeit der durch die zweite Klebemasse hergestellten Verbindung von Verglasung und Tragrahmen ist hierbei lediglich die Anforderung gestellt, dass diese zumindest so lange die Scheibe in der eingesetzten Position halten kann, bis die erste Klebedichtungsmasse ausgehärtet ist. Jedoch ist die Elastizität der durch die zweite Klebemasse hergestellten Verbindung von Scheibe und Tragrahmen idealerweise ähnlich einzustellen wie diejenige der durch die erste Klebedichtungsmasse erzeugten Verbindung im ausgehärteten Zustand, um einer unerwünschten Neutralisierung der durch die erste Klebedichtungsmasse gewährleisteten Dauerelastizität der Klebedichtungsverbindung entgegenzuwirken."
"In einer besonders vorteilhaften Ausführungsform wird als zweite Klebemasse eine lichtvernetzende Klebemasse eingesetzt. Unter einer lichtvernetzenden Klebemasse wird hier und im folgenden eine Klebemasse verstanden, welche durch Bestrahlung mit Licht im Wellenlängenbereich von ca. 300 nm bis ca. 780 nm gehärtet werden kann. Die Sensitivität einer solchen Klebemasse kann also ausdrücklich sowohl den UVA, UVB und/oder den sichtbaren Spektralbereich umfassen."
"In einer weiteren geeigneten Ausführungsform wird als zweite Klebemasse eine mittels Wärmezufuhr härtbare Klebemasse eingesetzt. Diese Klebemasse wird nach dem Einsetzen der Scheibe in den Tragrahmen mittels Wärmezufuhr gehärtet. Als Wärmequellen sind konventionelle Heizstrahler, Infrarot-Lampen o. dgl. einsetzbar."
"In einer besonders vorteilhaften Ausgestaltungsform wird die Wärme speziell in dem Bereich der aufgetragenen zweiten Klebemasse mittels eines Mikrowellen-Strahlers zugeführt, um so eine gleichmäßige Erwärmung der zweiten Klebemasse zu gewährleisten und damit die homogene Aushärtung der entsprechenden Klebestellen einzuleiten."
"In einer geeigneten Abwandlung der genannten Ausführungsformen wird als zweite Klebemasse eine Zwei-Komponenten (2K) Klebemasse eingesetzt, welche vor dem Einsetzen der Scheibe entweder auf den Tragrahmen oder auf die Scheibe aufgetragen wird. Bevorzugterweise härtet diese eingesetzte 2K-Klebemasse nach dem Mischen der beiden Komponenten binnen weniger als 5 Minuten, idealerweise zwischen 5 Sekunden und 120 Sekunden aus. Die Härtung der 2K-Klebemasse kann selbstverständlich nach dem Auftragen ebenfalls durch Wärmezufuhr zusätzlich beschleunigt werden. Als Wärmequellens sind konventionelle Heizstrahler, Infrarot-Lampen o. dgl. einsetzbar."
"In allen genannten Ausführungsformen ist es vorteilhaft, die zweite Klebemasse lediglich lokal begrenzt bezogen auf die gesamte Klebefläche einzusetzen. Bevorzugterweise werden hierfür gegenüberliegende (Eck-)Punkte und/oder Kanten der Scheibe oder des Tragrahmens gewählt, um nach Härtung der zweiten Klebemasse eine ausreichende Fixierung der Scheibe in der gewünschten Position zu gewährleisten, so dass keine Veränderung dieser Position mehr z.B. durch die auf Fertigungsstrassen unvermeidlichen Vibrationen und Erschütterungen stattfinden kann."

Gemäß dieser in EP 1 403 108 B1 vorgeschlagenen Lösung stellt also die "zweite Klebemasse", die einen ersten raschen Verbund zwischen Scheibe und Tragerahmen herstellen soll, einen reaktiven Klebstoff dar. Ein ähnliches Verfahren wird auch in EP 1 475 424 A1 beschrieben. Allerdings wird dort als Klebemasse, die einen ersten schnellen Verbund herstellen soll, ein Schmelzklebstoff verwendet. Dieser kann bereits unmittelbar nach der Herstellung des einzuklebenden Moduls, beispielsweise einer Scheibe, an einigen Stellen auf dieses aufgeklebt werden. Für Lagerung und Transport hat dann dieser Schmelzklebstoff gleichzeitig die Funktion eines Abstandhalters. Mit dessen Hilfe können die Module wie beispielsweise Scheiben aneinander gelehnt oder übereinander gestapelt werden, ohne dass sie sich berühren und hierdurch verkratzen können. Einleitend führt EP 1 475 424 A1 folgendes aus:
"Hotmeltklebstoffe sind seit langem bekannt und werden beispielsweise in der Verpackungs-, Textil und Schuhindustrie breit angewendet. Bei einem Hotmelt geht jedoch wie bei allen schnell aushärtenden Klebstoffen, wie beispielsweise 2-Komponeneten-Polyurethanklebstoffe, ein schneller Festigkeitsaufbau mit einer kurzen Offenzeit einher. Die Verklebung muss nämlich innerhalb der so genannten Offenzeit erfolgen, was bedingt, dass dem Anwender nur eine sehr kurze Zeit verbleibt, um den Klebstoff aufzutragen, die Verbundpartner zu positionieren und zu fügen. Beim Überschreiten der Topfzeit, ist aufgrund der mangelhaften Benetzung und/oder Abwesenheit von reaktiven Gruppen keine Haftung mehr möglich."
"Dies ist besonders bei großflächigen Verklebungen sehr nachteilig. Zudem ist dies insbesondere bei metallischen Untergründen oder anderen Untergründen mit guter Wärmeleitfähigkeit ebenso unvorteilhaft."
"Deshalb finden Hotmelts beispielsweise als Scheiben klebstoffe im Automobilbau keine Anwendung. Ein weiterer großer Nachteil von Hotmelts ist, dass eine erfolgte Verklebung infolge des thermoplastischen Verhaltens des Klebstoffes Tendenz zum Kriechen hat und die Festigkeit der Verklebung speziell bei hohen Temperaturen stark nachlässt. Aus diesem Grund sind Verklebungen mit starker dynamischer und insbesondere statischer Belastung ungeeignet, um mit Hotmeltklebstoffen realisiert zu werden."
"Aus diesem Grunde werden in der industriellen Fabrikation, insbesondere beim Fahrzeugbau, elastische einkomponentige Polyurethanklebstoffe eingesetzt. Diese Klebstoffe weisen jedoch den großen Nachteil auf, dass sie langsam aushärten. Bis der Klebstoff eine genügend große Eigenfestigkeit erzielt, um die Verbundpartner auch unter Druck und Krafteinwirkung in der gewünschten Position zu halten, werden die Verbundpartner üblicherweise relativ zu einander fixiert. Für solche Fixierungen werden häufig Keile oder Klebebänder verwendet, die nach der Aushärtung wieder entfernt werden. Die Verwendung von derartigen Fixierungshilfen bedeutet sowohl einen zusätzlichen Arbeitsaufwand als auch eine Gefahr für die Verletzung von sichtbaren Oberflächen."

Hierauf aufbauend beschreibt EP 1 475 424 A1 stapelbare Module, die mindestens einen Abstandhalter aufweisen, welcher auf einem Hotmelt-Klebstoffbindemittel basiert, und auf einer Oberfläche des Moduls angebracht ist und auf dieser haftet. Weiter heißt es in EP 1 475 424 A1 wörtlich:
"Die beschriebenen Module können praktisch überall eingesetzt werden. Bevorzugte Einsatzgebiete sind Maschinenbau, Computerbau, Gebrauchsgüterbau, insbesondere Haushaltsmaschinen, wie beispielsweise Waschmaschinen, Herde oder Kaffeemaschinen, Geschirrspülmaschinen, Fahrzeugbau, insbesondere Bus-, Automobil-Nutzfahrzeug- und Bus- oder Zugbau."
"Module können diverse Baugruppen sein, die ihrerseits aus mehreren Teilen zusammengesetzt sind. Die Komplexität solcher Module ist sehr unterschiedlich, es können beispielsweise zwei miteinander fixierte Teilschalen sein oder aber es können Module mit Tausenden von Teilen sein. Beispiele für solche Module sind Reserveradmulden, Scheinwerfergehäuse, Rückspiegel, Führerkabinen, Steuerungseinheiten, Türen, Leiterplatinen, Dachmodule, usw.. Besonders bevorzugt sind als Module Scheiben jeglicher Art, insbesondere Dachmodule, Windschutzscheiben-, Heckscheiben-, Seitenscheiben-Module."
"Der Abstandhalter hat die primäre Funktion, durch seine räumliche Ausdehnung die direkte Berührung von zwei Flächen von mindestens zwei aufeinander gestapelten oder sich seitlich berührenden Moduloberflächen zu verhindern. Solche Abstandhalter werden sinnvollerweise nur dort angebracht, wo mit einem Kontakt der Modulflächen zu rechnen ist. Der Ort, die Anzahl und genaue Geometrie dieser Abstandhalter ist abhängig von der Modulgeometrie und dem Fachmann ist klar, wie diese zu konzipieren sind, so dass die Funktion des Abstandhalters gewährleistet ist. In einer bevorzugten Ausführungsform ist die Dicke des Abstandhalters gleich groß oder geringfügig größer als die geplante Klebstoffdicke zwischen dem Modul und einer zusätzlich zu verklebende Oberfläche."
"Der Abstandhalter basiert auf einem Hotmelt-Klebstoffbindemittel. Das Hotmelt-Klebstoffbindemittel ist vorzugsweise lösungsmittelfrei und liegt bei Raumtemperatur in einem festen Aggregatszustand vor. Zur Verarbeitung muss das Bindemittel aufgewärmt und in einen flüssigen Zustand überführt werden. Die Schmelztemperatur des Hotmelt-Klebstoffbindemittels als Bestandteil des Abstandhalters ist hierbei von großer Wichtigkeit. Je nach Material des Moduls kann dieser stark variieren. Einerseits ist darauf zu achten, dass der Schmelzpunkt oder Schmelzbereich nicht zu tief liegt. Der Abstandhalter darf sich sinnvollerweise nicht bereits bei der Lager- oder Transporttemperatur plastisch verformen oder gar schmelzen, denn dadurch würde die Schutzfunktion des Abstandhalters stark beeinträchtigt und würde gegebenenfalls höchstens noch als Schutzfolie zu gebrauchen sein."
"Auf der anderen Seite sollte die Schmelztemperatur nicht allzu hoch sein. Einerseits sollten die Materialien durch die eingebrachte Temperatur nicht allzu stark geschädigt werden. Zu hohe Temperaturen können infolge von Wärmeausdehnungen zu Verformungen führen, besonderes ausgeprägt ist dies bei Verklebungen, bei denen die Materialien der verklebten Stoffe stark unterschiedliche Ausdehnungskoeffizienten aufweisen, wie beispielsweise in der Kombination Metall/Kunststoff. Wärmeempfindliche Materialien begrenzen ebenfalls die mögliche Schmelztemperatur der eingesetzten Hotmelt-Klebstoffbindemittel. Besonders bei der Anwendung von Kunststoffen ist die verwendbare Temperatur nach oben begrenzt. So ist es beispielsweise vorteilhaft, darauf zu achten, dass die Schmelztemperatur des Abstandhalters unter der Erweichungstemperatur des Kunststoffes liegt."
"Die Schmelztemperatur des Hotmelt-Klebstoffbindemittels beträgt vorzugsweise zwischen 50°C und 140°C, insbesondere zwischen 55°C und 120°C."
"Das Hotmelt-Klebstoffbindemittel des Abstandhalters ist so auszuwählen, dass es auf der Oberfläche des Moduls und gegebenenfalls auf einer damit zu verklebenden Fläche, eine zumindest temporäre Haftung aufweist. Die Haftung der Abstandhalter auf dem Substrat ist mindestens so groß, dass diese durch ihr Eigengewicht und durch andere Kräfte, wie sie bei der Stapelung und beim Transport der Module entstehen, nicht abfallen."
"Chemisch gesehen, kommen grundsätzliche alle aus der Hotmelt-Klebstofftechnologie bekannten Materialien in Frage. Besonders geeignet sind beispielsweise Ethylen-Vinylacetat-Copolymere, Polyolefine, insbesondere APAOs (Amorphe-Poly-Alpha-Olefine), Ethylen-Ethylacrylat-Copolymere, Polyamide, Polyester, insbesondere Polycaprolactonpolyester, Polyurethan, insbesondere TPUs (Thermoplastische Polyurethane) und Polycaprolacton Polyurethane sowie Butadien-Styrol-Blockcopolymere. Es können auch Mischungen dieser Polymere eingesetzt werden, wobei dies Mischungen innerhalb der gleichen Klasse oder unter den Klassen sein können."
"Der Abstandhalter muss auf einer Moduloberfläche angebracht werden und auf dieser haften. Die Moduloberfläche kann aus unterschiedlichem Material sein. Besonderes bevorzugt sind als Material Metalle und Kunststoffe. Das Modul ist üblicherweise aus unterschiedlichen Materialien aufgebaut. Besonders häufig ist die Oberfläche des Moduls veredelt. Eine solche Veredelung kann beispielsweise ein Lack, eine Beschichtung oder eine Oberflächenbehandlung darstellen. Beispiele für derartige Veredelungsmethoden sind Keramikbeschichtungen, Pulverlackierungen, Eloxierung, Zinkstaubgrundierung, Phosphatierung, Chromatierungen, Sol/Gel-Beschichtungen, usw.."
"Die Moduloberfläche kann bei Bedarf für eine Verklebung vorbehandelt werden. Solche Vorbehandlungen umfassen sowohl chemische als auch physikalische Vorbehandlungen wie Schleifen, Sandstrahlen, Bürsten oder dergleichen, oder Behandeln mit Reinigern, Lösungsmitteln, Haftvermittlern, Haftvermittlerlösungen oder Primern."
"Der Abstandhalter besteht aus einem Hotmelt-Klebstoffbindemittel oder enthält ein Hotmelt-Klebstoffbindemittel. Es ist jedoch vorteilhaft, wenn der Anteil des Hotmelt-Klebstoffbindemittels einen wesentlichen Gewichtsanteil, vorzugsweise mehr als 70 Gewichts-%, insbesondere mehr als 90 Gewichts-%, bezogen auf das Gewicht des Abstandhalters darstellt. Weitere Bestandteile können beispielsweise Additive, Tackifier, Haftvermittler, Füllstoffe, UV-Schutzmittel, Wärmeschutzmittel, Biocide, Fungicide, Pigmente, usw. sein."
"Der Abstandhalter ist bevorzugt mindestens an der Oberfläche geringfügig elastisch und weist keine scharfen Kanten auf"
"In einer bevorzugten Ausführungsform sind mikrowellen-absorbierende Materialien Bestandteile des Abstandhalters. Bevorzugt sind hierbei einerseits mikrowellen-absorbierende Füllstoffe und mikrowellen-absorbierende Pigmente, wie beispielsweise Ferrite, Ceroxide, Germaniumoxide, Russ, usw. Besonders bevorzugt sind so genannte Nanopartikel und/oder Russ. Die mittlere Partikelgröße dieser mikrowellen-absorbierenden Füllstoffe und mikrowellen-absorbierenden Pigmente liegt vorzugsweise unter einem Mikrometer, insbesondere unter 100 Nanometer."
"Die Geometrie des Abstandhalters ist bei flächiger Ausführung vorteilhaft im Querschnitt ein Rechteck, ein Dreieck oder ein Trapez. Der Abstandhalter kann auch eine Porenstruktur aufweisen."
"Die Anbringung des Abstandhalters auf das Modul kann auf unterschiedliche Art erfolgen. Beispielsweise kann einerseits ein Abstandhalter durch einen Extrusionsprozess oder Gießprozess geformt werden. Ein solcher Abstandhalter kann bei der Verarbeitung durch eine Wärmequelle in dem Bereich, welcher eine Klebverbindung mit der Moduloberfläche eingehen soll, derart aufgewärmt werden, dass zumindest die Oberfläche an- oder aufgeschmolzen wird, und anschließend auf die Moduloberfläche aufgesetzt werden. Durch die angeschmolzene Abstandhalteroberfläche tritt eine Benetzung der Moduloberfläche auf, was beim Abkühlen des Abstandhalters zum Aufbau der Haftung führt. Alternativ kann auch die Moduloberfläche zumindest lokal im Bereich der geplanten Verklebung auf eine Temperatur, welche bei oder über dem Schmelzpunkt des Abstandhalters liegt, aufgewärmt werden. Anschließend wird ein Abstandhalter auf die warme Oberfläche gesetzt. Durch den Kontakt mit der warmen Oberfläche schmilzt der Abstandhalter im Bereich der Kontaktfläche an oder auf."
"Andererseits kann beispielsweise der Abstandhalter auch direkt als Schmelze auf die Moduloberfläche aufgebracht werden, beispielsweise mit Hilfe einer Düse. Durch unterschiedliche Formen der Düsen lässt sich der Querschnitt des Abstandhalters bestimmen. Neben raupenförmigen Abstandhalter sind auch punktförmige Abstandhalter so realisierbar."
"Die Erwärmung des Abstandhalters oder der Moduloberfläche kann beispielsweise mittels Infrarotstrahler, Zufuhr von Warmluft, kontaktieren mit elektrischen Wärmeelementen oder Lagerung im Ofen erfolgen. Bei geeigneten metallischen Moduloberflächen kann Induktionsheizung verwendet werden."
"Bei jeglichen Aufheizprozessen ist jedoch darauf zu achten, dass das Schmelzen des Abstandhalters vorteilhaft nur auf den Bereich der mit dem Modul zu kontaktierenden Oberfläche limitiert ist. Dies hat den Vorteil, dass der vom Abstandhalter bedingte Abstand zwischen zwei Modulen bei allen identischen Abstandhaltern im wesentlichen gleich ist, und leicht durch die Dimension des eingesetzten Abstandhalterkörpers vorgegeben werden kann. Insbesondere wichtig ist dies, wenn in einer, wie weiter unten im Detail beschrieben Ausführungsform der Erfindung, dem Abstandhalter beim Verkleben des Moduls die Funktion eines Klebstoffabstandhalters zukommt."

Zur Erläuterung des Verfahrens enthält EP 1 475 424 A1 einige Abbildungen, insbesondere die Fig. 1. Diese macht deutlich, wie die Abstandshalter aus Schmelzklebstoff auf das zu verklebende Modul aufgebracht sind und wie zusätzlich der eigentliche Montageklebstoff in Form einer Klebstoffraupe aufgebracht wird. EP 1 475 424 A1 erläutert dies folgendermaßen:
"Nach Fig. 1 wird ein erfindungsgemäßer Abstandhalter 1 an der Fertigungslinie nicht entfernt, sondern verbleibt an seiner Position auf einem Modul 2, hier einer Autoscheibe. Auf das Modul 2 wird dann Montageklebstoff 3, z.B. 1C-PUR Klebstoff, appliziert. Vorzugsweise wird die Montageklebstoffraupe 3 nicht durch die Hotmelt-Abstandhalter 1 unterbrochen, sondern schließt diese mit ein bzw. verläuft innerhalb der Abstandhalter 1. Dadurch werden evtl. später auftretende Undichtigkeiten am Stoss des Montageklebstoffes und des Abstandhalters ausgeschlossen. Nachdem der Montageklebstoff aufgetragen ist, werden die Abstandhalter aus Hotmeltklebstoff aufgeschmolzen. Durch diesen Prozess werden die Abstandhalter zu einem Hotmelt-Fixierklebstoff. Dieser Prozess kann durch die verschiedensten Energiequellen geschehen, bevorzugt durch IR-Strahlung, Heißluftzufuhr oder besonders bevorzugt durch Mikrowellenstrahlung. Das Aufschmelzen der Hotmelt-Abstandhalter kann auch vor oder während des Montageklebstoffauftrags geschehen. Das Modul mit Montageklebstoff und dem Abstandhalter mit aufgeschmolzenem Hotmelt-Fixierklebstoff wird dann manuell oder automatisiert, z.B. mit einem Roboter, in das zu produzierende Gut eingebaut / eingepresst. Der Hotmelt-Fixierklebstoff, wie auch der Montageklebstoff, benetzen die Klebefläche des Gegenstückes. Durch Abkühlen verfestigt sich der Hotmelt-Fixierklebstoff rasch und baut Haftung zum Substrat auf. Die Haftung ist dann mindestens so groß, dass das Modul in seiner Position fixiert ist, bis der eigentliche Montageklebstoff genügend Festigkeit aufgebaut hat und das Modul fest in seiner Position zu halten in der Lage ist. Fixierhilfen wie Klebebänder, Keile oder Zwingen sind bei diesem Montageverfahren nicht mehr nötig, was einen entscheidenden Vorteil bietet. Die Abstandhalter müssen also nach Ihrem Gebrauch nicht mehr entfernt und entsorgt werden, sondern werden zu einem Fixierklebstoff umfunktioniert. Zusätzliche Fixierhilfen sind somit auch nicht mehr notwendig, was ein weiterer großer Vorteil ist."

Nach diesen Ausführungen wird der Hotmelt-Fixierklebstoff (also der Schmelzklebstoff) vor dem Verkleben des Moduls mit der aufnehmenden Einheit durch Erwärmen aufgeschmolzen. Dies kann gemäß der vorstehend wiedergegebenen Stelle aus EP 1 475 424 A1 "durch die verschiedensten Energiequellen geschehen, bevorzugt durch IR-Strahlung, Heißluftzufuhr oder besonders bevorzugt durch Mikrowellenstrahlung." Dies weist verfahrenstechnische Nachteile auf. Das besonders bevorzugte Aufschmelzen durch Mikrowellenstrahlung setzt voraus, dass der Schmelzklebstoff Komponenten wie beispielsweise Pigmente enthält, die Mikrowellenstrahlung absorbieren können und hierdurch erwärmt werden. Diese erforderlichen Komponenten verteuern den Schmelzklebstoff und schränken dessen Formulierungsmöglichkeiten ein. Sofern die Mikrowellen-absorbierenden Komponenten gleichmäßig im Schmelzklebstoff verteilt sind, wird dieser in seinem gesamten Volumen erwärmt und schmilzt auf. Hierdurch erweicht die gesamte Masse des Schmelzklebstoffs, was das Positionieren des Moduls erschwert. Die Mikrowellen-absorbierenden Komponenten nur in den eigentlich aufzuschmelzenden Randbereich des Schmelzklebstoffs einzubringen, ist aber verfahrenstechnisch aufwendig und verteuert den Herstellungsprozess.

Ähnliche Probleme stellen sich beim Aufschmelzen des Schmelzklebstoffs durch IR-Strahlung oder Heißluftzufuhr. Auch hierbei ist es schwierig, das Aufschmelzen des Schmelzklebstoffs auf die eigentlich zu verklebende Grenzschicht zu beschränken und so ein maßgenaues Positionieren des einzuklebenden Bauteils zu gewährleisten.

Die vorliegende Erfindung bildet das Verfahren gemäß EP 1 475 424 A1 dahingehend fort, dass das Aufschmelzen des Schmelzklebstoffs beim Verbinden des ersten Bauteils mit dem zweiten Bauteil auf einen Grenzbereich des Schmelzklebstoffs beschränkt wird. Ein unkontrolliertes Aufweichen größerer Bereiche oder gar des gesamten Schmelzklebstoffs wird vermieden, wodurch das Verkleben des ersten Bauteils mit dem zweiten Bauteil durch eine Klebefuge mit vorbestimmter Dicke erleichtert wird. Außerdem muss der Schmelzklebstoff keine strahlungsabsorbierenden Komponenten enthalten, da er nicht durch Einwirkung von Strahlung aufgeschmolzen werden muss.

Gegenstand der vorliegenden Erfindung ist demnach ein Verfahren zum Verkleben eines ersten Bauteils mit einem zweiten Bauteil, das einen Randbereich aufweist, mit dem überlappend das erste Bauteil verklebt wird, wobei man
a) mindestens einen Körper aus einem Schmelzklebstoff so mit dem ersten Bauteil verklebt, dass er beim Verkleben des ersten Bauteils mit dem zweiten Bauteil in Kontakt mit dem Randbereich kommt,
b) den Randbereich lokal an mindestens einer Stelle, an der beim Verkleben des ersten Bauteils der aufgebrachte Körper aus Schmelzklebstoff in Kontakt mit dem Randbereich kommt, mittelbar oder unmittelbar durch elektromagnetische Induktion auf eine Temperatur erwärmt, die oberhalb der Schmelztemperatur des Schmelzklebstoffs liegt,
c) das erste Bauteil so mit dem Randbereich des zweiten Bauteils kontaktiert, dass der Körper des Schmelzklebstoffs in Kontakt mit der im Schritt b) erwärmten Stelle des Randbereichs kommt, so dass der Schmelzklebstoff an der Kontaktstelle mit dem Randbereich aufschmilzt und nach Abkühlen das erste Bauteil mit dem Randbereich des zweiten Bauteils verbindet,
d) wobei man zusätzlich vor dem Schritt b) oder nach dem Schritt c) einen reaktiven Klebstoff so zwischen das erste und das zweite Bauteil einbringt, dass er das erste Bauteil mit dem Randbereich des zweiten Bauteils verbindet, und
e) den reaktiven Klebstoff aushärtet oder aushärten lässt.

Der wesentliche Unterschied zum vorstehend zitierten Stand der Technik besteht also darin, dass mindestens eine Stelle des Randbereichs des zweiten Bauteils, mit dem das erste Bauteil verklebt wird, mittelbar oder unmittelbar durch elektromagnetische Induktion auf eine Temperatur oberhalb der Schmelztemperatur des Schmelzklebstoffs erwärmt wird. Beim Kontaktieren des ersten Bauteils mit seinen hieran befindlichen Körpern aus Schmelzklebstoff mit dem Randbereich des zweiten Bauteils schmilzt der Schmelzklebstoff an den erwärmten Stellen in einem Randbereich auf, ohne dass der gesamte Schmelzklebstoff erweicht. Die Tiefe des Aufschmelzens lässt sich dadurch steuern, dass man den Randbereich des zweiten Bauteils lokal auf eine Temperatur erwärmt, die um einen vorbestimmten Betrag über der Schmelztemperatur des Schmelzklebstoffs liegt. Vorteilhaft erwärmt man den Randbereich des zweiten Bauteils auf eine Temperatur, die um 10 bis 30 °C oberhalb der Schmelztemperatur des Schmelzklebstoffs liegt. Das Erwärmen durch elektromagnetische Induktion erlaubt es, die Temperatur, auf die der Randbereich des zweiten Bauteils punktuell erwärmt wird, auf ± 10 °C, ja sogar auf ± 5 °C genau einzustellen. Vorzugsweise stimmt man die Temperatur, auf die der Randbereich des zweiten Bauteils punktuell erwärmt wird, und den Schmelzpunkt das Schmelzklebstoffs so aufeinander ab, dass beim Kontakt des Schmelzklebstoffs mit dem Randbereich eine Randschicht des Schmelzklebstoffs mit einer Dicke von 1 bis 2 mm aufschmilzt.

In den Schmelzklebstoff selbst wird also keine Strahlungsenergie eingetragen, so dass dieser keine Komponenten enthalten muss, die Strahlungsenergie wie beispielsweise Mikrowellenenergie absorbieren können.

Bei dem erfindungsgemäßen Verfahren wird also der Randbereich lokal an denjenigen Stellen, die mit dem Schmelzklebstoff in Kontakt stehen oder in Kontakt kommen sollen, auf eine Temperatur oberhalb der Schmelztemperatur des Schmelzklebstoffs erwärmt. Der Schmelzklebstoff schmilzt am Grenzbereich zur Oberfläche des Randbereichs also dadurch auf, dass er mit dem erwärmten Stellen des Randbereichs in Kontakt kommt. Die erwärmten Stellen des Randbereichs weisen eine Temperatur auf, die oberhalb der Schmelztemperatur des Schmelzklebstoffs liegt. Dies hat zur Folge, dass der Schmelzklebstoff besonders gut benetzt und nach dem Abkühlen besonders gut auf dem Randbereich haftet. Demgegenüber ist die Benetzung schlechter und die Haftung geringer, wenn man zuerst den Schmelzklebstoff erwärmt und dann mit dem Randbereich in Kontakt bringt, dessen Temperatur unterhalb der Schmelztemperatur des Schmelzklebstoffs liegt. Der Schmelzklebstoff erstarrt dann an der Kontaktstelle rasch, ohne den Randbereich ausreichend zu benetzen.

Das lokale Erwärmen des Randbereichs auf eine Temperatur, die oberhalb der Schmelztemperatur des Schmelzklebstoffs liegt, führt auch auf geölten Teilen zu einer guten Haftung des Schmelzklebstoffs. Zum einen verdampft das Öl beim Erwärmen teilweise, bevor es in Kontakt mit dem Schmelzklebstoff kommt. Zum anderen ist auch das verbleibende Öl auf eine Temperatur erwärmt, die oberhalb der Schmelztemperatur des Schmelzklebstoffs liegt. Dies verbessert die Aufnahme des Öls in den Schmelzklebstoff und das Entfernen von der Grenzfläche, so dass es die Haftung nicht nachteilig beeinflusst.

Die Größe der jeweiligen Fläche des Randbereichs, die vor, während oder nach dem Kontakt mit dem Schmelzklebstoff erwärmt wird, hängt von der Größe der Kontaktfläche des Schmelzklebstoffs ab. Im allgemeinen ist es ausreichend, wenn die erwärmte Fläche im Falle einer Kreisfläche einen Durchmesser im Bereich von 5 bis 20, insbesondere von 8 bis 15 mm hat. Für polygonale, beispielsweise quadratische Flächen lässt sich dies entsprechend umrechnen. Bei Eintrag einer entsprechenden Leistung (vorzugsweise im Bereich von 300 bis 1000 Watt) ist eine Heizdauer im Bereich von 1 bis 10 Sekunden in der Regel ausreichend, um eine Temperatur oberhalb der Schmelztemperatur des Schmelzklebstoffs zu erreichen. Während dieser Aufheizzeit oder unmittelbar im Anschluss hieran sollte der Schmelzklebstoff mit den erwärmten Stellen in Kontakt gebracht werden. Da in dieser kurzen Zeitspanne wenig Wärme abgeleitet wird, lässt sich die Erwärmung sehr gut lokalisieren.

Das lokale Erwärmen des Randbereichs kann "von unten" oder "von oben" erfolgen. Dabei bedeutet "unten" diejenige Seite des Randbereichs, die der Kontaktfläche mit dem Schmelzklebstoff gegenüber liegt. "Oben" bedeutet diejenige Seite, die mit dem Schmelzklebstoff in Kontakt kommt. Dies gilt insbesondere für metallische Randbereiche, die unmittelbar durch elektromagnetische Induktion erwärmt werden. Beim Erwärmen "von unten" bringt man den Induktor an diejenige Stelle an der Unterseite des Randbereichs, die der Kontaktstelle mit dem Schmelzklebstoff gegenüber liegt. Unmittelbar bevor oder während die Oberseite mit dem Schmelzklebstoff in Kontakt kommt, wird die entsprechende Stelle des Randbereichs von unten durch elektromagnetische Induktion erwärmt. Ist das erste Bauteil nicht metallisch und daher selbst durch elektromagnetische Induktion nicht erwärmbar, kann das lokale Erwärmen des Randbereichs unmittelbar vor oder während des Kontakts mit dem Schmelzklebstoff auch "von oben" erfolgen. Man bringt dann den Induktor an diejenige Stelle des ersten Bauteils, die dessen Kontaktstelle mit dem Schmelzklebstoff gegenüber liegt. Beim Einschalten des elektromagnetischen Wechselfelds durchdringt dieses das erste Bauteil sowie den Schmelzklebstoff, ohne diese wesentlich zu erwärmen, und erwärmt durch elektromagnetische Induktion diejenige Stelle des Randbereichs, die mit dem Schmelzklebstoff in Kontakt kommen soll oder in Kontakt ist. Diese letztgenannte Verfahrensweise wird man insbesondere dann wählen, wenn es aus räumlichen Gründen nicht möglich ist, den Induktor an die Rückseite des Randbereichs heranzubringen. Unabhängig von der gewählten Verfahrensweise ist es bevorzugt, so viele Induktoren zur lokalen Erwärmung des Randbereichs vorzusehen, wie Schmelzklebstoffkörper am ersten Bauteil befestigt sind. Hierdurch können alle Schmelzklebstoff-körper gleichzeitig mit dem zweiten Bauteil verbunden werden.

Ähnlich wie es auch in EP 1 475 424 A1 beschrieben ist, lässt sich der reaktive Klebstoff, der letztlich für die Festigkeit der Verbindung zwischen erstem und zweitem Bauteil sorgt, auf unterschiedliche Weise in den Spalt zwischen erstem und zweitem Bauteil einbringen. Die erste Alternative besteht darin, dass man als Schritt d) den reaktiven Klebstoff vor dem Schritt b) so auf das erste Bauteil aufträgt, dass er beim Verkleben des ersten Bauteils mit dem zweiten Bauteil in Schritt c) in Kontakt mit dem Randbereich des zweiten Bauteils kommt. Dies kann beispielsweise in Form einer Klebstoffraupe geschehen, die kontinuierlich auf denjenigen Randbereich des ersten Bauteils aufgetragen wird, der beim Verkleben mit dem zweiten Bauteil auf dessen Randbereich aufliegt. Vorzugsweise führt man diese Klebstoffraupe so, dass man sie um die Körper des Schmelzklebstoffs herum führt, ohne diese zu berühren. Dies entspricht dem Verfahren, das in Fig. 1 von EP 1 475 424 A1 dargestellt ist.

Alternativ hierzu bringt man den reaktiven Klebstoff nicht auf das erste Bauteil, sondern auf den Randbereich des zweiten Bauteils auf. Auch dies erfolgt am besten in Form einer Klebstoffraupe, die man so legt, dass diejenigen Stellen des Randbereichs, die vor dem Einsetzen des ersten Bauteils mittelbar oder unmittelbar induktiv erwärmt werden und die in Kontakt mit den Schmelzklebstoff-Körpern kommen, umgangen werden. Diese Alternative ist also dadurch gekennzeichnet, dass man als Schritt d) den reaktiven Klebstoff vor dem Schritt b) so auf den Randbereich des zweiten Bauteils aufträgt, dass er beim Verkleben des ersten Bauteils mit dem Randbereich des zweiten Bauteils mit dem ersten Bauteil in Kontakt kommt, wobei diejenigen Stellen des Randbereichs frei von reaktivem Klebstoff bleiben, die im nachfolgenden Schritt c) mit dem Körper aus Schmelzklebstoff in Kontakt kommen.

Eine dritte, jedoch verfahrenstechnisch aufwendigere Alternative besteht darin, dass man den reaktiven Schmelzklebstoff erst nach dem Schritt c) in den verbleibenden Spalt zwischen dem ersten Bauteil und dem Randbereich des zweiten Bauteils einbringt.

Der Körper aus Schmelzklebstoff, den man zunächst mit dem ersten Bauteil verklebt, ist vorzugsweise so geformt, dass er zwei zumindest angenähert parallele Flächen aufweist, wobei die erste der parallelen Flächen mit dem ersten Bauteil und die zweite der parallelen Flächen mit dem Randbereich des zweiten Bauteils in Kontakt kommt. Das Verkleben des Schmelzklebstoff-Körpers mit dem ersten Bauteil geschieht vorzugsweise dadurch, dass man ihn an der zu verklebenden Fläche aufschmilzt, an das erste Bauteil andrückt und durch Abkühlen erstarren lässt. Die Körper des Schmelzklebstoffs lassen sich beispielsweise durch Injektion in eine entsprechende Form oder durch Extrusion und Zerschneiden herstellen. Aus Gründen der einfachen Fertigung haben die Körper aus Schmelzklebstoff vorzugsweise die Form einer runden oder mehreckigen Scheibe oder Säule. Dabei wird unter "Scheibe" ein Körper verstanden, dessen Höhe geringer ist als der Durchmesser der Grundfläche. Umgekehrt beschreibt eine "Säule" einen Körper, dessen Höhe gleich oder größer ist als der Durchmesser der Grundfläche. Die "Grundfläche" ist dabei diejenige Fläche, mit der der Schmelzklebstoff-Körper auf dem ersten Bauteil aufgeklebt wird. Beispielsweise kann die Scheibe oder Säule dreieckig, viereckig (insbesondere quadratisch oder rechteckig, jedoch auch trapezförmig), fünfeckig oder sechseckig sein.

Der Durchmesser der Grundfläche liegt vorzugsweise im Bereich von 5 bis 15 mm, insbesondere im Bereich von 8 bis 12 mm. Dabei wird unter "Durchmesser" bei nicht runden Grundflächen die längste Diagonale der Grundfläche verstanden. Die Höhe des Körpers richtet sich nach dem gewünschten Spalt, der überbrückt werden soll. Dabei ist zu beachten, dass durch das Anschmelzen der zu verklebenden Flächen Höhe verloren geht. Die Höhe des Körpers aus Schmelzklebstoff sollte daher vor dem Ankleben mindestens 4 mm betragen. Eine Höhe von größer als 10 bis 20 mm dürfte jedoch in der Praxis kaum erforderlich sein.

Die Körper aus Schmelzklebstoff können jedoch vor dem Verbinden mit dem ersten Bauteil auch kugelförmig sein. Beim Verbinden mit dem ersten Bauteil wird die Kugel an der Kontaktstelle abgeflacht, im Extremfall bis zu einer angenäherten Halbkugel. Beim Verbinden mit dem Randbereich des zweiten Bauteils wird die entsprechende Kontaktstelle der ehemaligen Kugel ebenfalls abgeflacht, so dass der Schmelzklebstoff nach dem Verbinden des ersten Bauteils mit dem Randbereich des zweiten Bauteils etwa die Form einer runden Scheibe aufweist.

Sofern das erste Bauteil metallisch ist, kann man dieses durch elektromagnetische Induktion unmittelbar erwärmen, bevor es mit dem Schmelzklebstoffkörper in Kontakt kommt oder während es mit diesem in Kontakt ist. Dies kann auf analoge Weise geschehen, wie es vorstehend für das lokale Erwärmen des Randbereichs des zweiten Bauteils beschrieben wurde.

Ist das erste Bauteil jedoch nicht metallisch (beispielsweise Glas, Holz oder Kunststoff), erwärmt man es vorzugsweise mittelbar durch elektromagnetische Induktion. Hierauf wird weiter unten eingegangen.

Als Schmelzklebstoff können solche Schmelzklebstoffe verwendet werden, die im Stand der Technik bekannt sind und die beispielsweise in EP 1 475 424 A1 beschrieben werden. Beispielsweise kann der Schmelzklebstoff eine oder mehrere der folgenden Komponenten enthalten oder hieraus bestehen: Polyolefin, Ethylen-Vinylacetat-Copolymer, Ethylen-Ethylacrylat-Copolymer, Polyamid, Polyester, Polyurethan, Butadien-Styrol-Blockpolymer. Bevorzugt sind diejenigen Schmelzklebstoffe, die in Absatz [0027] von EP 1 475 424 A1 angeführt sind.

Sofern das erste Bauteil zumindest an der Stelle, auf die der Körper des Schmelzklebstoffs aufgeklebt wird, aus Glas besteht, ist die Verwendung eines Schmelzklebstoffs bevorzugt, der für eine Haftung auf Glas optimiert ist. Hierfür kommen beispielsweise Schmelzklebstoffe in Betracht, die eine oder mehrere der folgenden Komponenten enthalten oder hieraus bestehen:
Cycloaliphatisches Kohlenwasserstoffharz,
Copolymer von Styrol mit Isopren und/oder α-Methylstyrol, das gegebenenfalls hydriert sein kann,
hydriertes Polydecen,
Copolymer vom Maleinsäureanhydrid mit Ethylen und/oder Propylen.

Ein für diesen Verwendungszweck besonders geeigneter Schmelzklebstoff enthält (in Gew.-% bezogen auf den gesamten Schmelzklebstoff):
Cycloaliphatisches Kohlenwasserstoffharz in Mengen von 20 bis 30 Gew.-%,
Copolymer von Styrol mit Isopren und/oder α-Methylstyrol, das gegebenenfalls hydriert sein kann, in Mengen von 20 bis 40 Gew.-%
hydriertes Polydecen in Mengen von 10 bis 20 Gew.-%
Copolymer vom Maleinsäureanhydrid mit Ethylen und/oder Propylen in Mengen von 25 bis 35 Gew.-%.
Zusätzlich können weitere Komponenten in einer Menge von insgesamt bis zu 10 Gew.-% vorhanden sein, beispielsweise Styrol-Ethylen-Butylen-Copolymer, das vorzugsweise in Mengen von 1 bis 8 Gew.-% eingesetzt wird,
Dabei addieren sich die Anteile der Einzelkomponenten zu 100 Gew.-%

In dem erfindungsgemäßen Verfahren können auch weitere Klassen von Schmelzklebstoffen eingesetzt werden. Beispielsweise seien genannt:
Geeignete Schmelzklebstoffe können beispielsweise auf Basis von Polyestern, Polyurethanen, Polyolefinen, Polyacrylate oder Polyamiden bestehen. Schmelzklebstoffe auf der Basis von Polyestern sind beispielsweise in der EP 028687 beschrieben. Es handelt sich dabei um Umsetzungsprodukte aus aliphatischen, cycloaliphatischen oder aromatischen Dicarbonsäuren, die mit aliphatischen cyclischen oder aromatischen Polyolen umgesetzt werden können. Durch Auswahl der Carbonsäuren und der Polyole können kristalline oder teilkristalline Polyester erhalten werden. Üblicherweise werden Dicarbonsäuren und Diole miteinander zur Reaktion gebracht. Es ist jedoch auch möglich, dass anteilsweise Tricarbonsäuren oder Triole eingesetzt werden.

In der EP 434467 oder der DE 4128274 werden thermoplastische Polyurethane als Schmelzklebstoffe beschrieben. Es handelt sich dabei um Umsetzungsprodukte von Polyolen mit Polyisocyanaten, die ggf. einen erhöhten Modul aufweisen. Als Polyole können die an und für sich bekannten Polyole auf Basis von Polyethern, Polyestern; Polyacrylaten, Polybutadienen, Polyole auf Basis von pflanzlichen Rohstoffen oder oleochemische Polyole eingesetzt werden. Um eine gute Reaktivität zu erzielen, sind üblicherweise zumindest anteilig aromatische Isocyanate enthalten. Durch Auswahl der Polyole und/oder Isocyanate können die Eigenschaften des Prepolymeren beeinflusst werden, beispielsweise der Schmelzpunkt, die Elastizität oder die Haftung. Es sind aber auch reaktive thermoplastische Polyurethane geeignet, die dann nach Applikation ggf. auch dauerhaft vernetzen können.

Weitere geeignete Schmelzklebstoffe können beispielsweise Polyamide sein. Geeignete Polyamide sind beispielsweise in der EP 749463 beschrieben. Es handelt sich dabei um Polyamidschmelzklebstoffe auf Basis von Dicarbonsäuren und Polyetherdiaminen. Besonders geeignete Schmelzklebstoffzusammensetzungen sind in der EP 204 315 beschrieben. Es handelt sich dabei um Polyesteramide, die auf Basis von Polymerfettsäuren und Polyaminen hergestellt werden.

Beispielsweise können als Polyamide solche auf Basis von Dimerfettsäure-freien Polyamiden ausgewählt werden. Diese sind herstellbar aus
- 40 bis 50 mol %, vorzugsweise 50 mol %, einer oder mehrerer C₄-C₁₈ - Dicarbonsäure(n)
- 5 bis 45 mol %, vorzugsweise 15 bis 40 mol %, mindestens eines aliphatischen Diamines
- 5 bis 40 mol %, vorzugsweise 20 bis 30 mol %, eines oder mehrerer cycloaliphatischer Diamine
- 0 bis 40 mol %, vorzugsweise 5 bis 25 mol % Polyetherdiaminen,
wobei die Summe der eingesetzten Diamine in einer bevorzugten Ausführungsform 50 mol % ergibt, so dass Dicarbonsäurekomponente und Diaminkomponente in etwa equivalenten molaren Mengenanteilen vorliegen.

Jedoch werden die Dicarbonsäuren vorzugsweise in bis zu 10 % stöchiometischen Überschuß gegenüber den Diaminen eingesetzt, so dass Carboxyl - terminierte Polyamide entstehen. Das Molekulargewicht der erfindungsgemäß zu verwendenden Polyamide beträgt etwa 10 000 bis 50 000, vorzugsweise 15 000 bis 30 000. Diese erfindungsgemäß geeigneten Polyamide haben eine Viskosität zwischen 5000 und 60 000 mPas, vorzugsweise zwischen 15000 und 50 000 mPas (gemessen bei 200 °C, Brookfield Thermosel RVT, EN ISO 2555).

Beispiele für Dicarbonsäuren zur Herstellung der erfindungsgemäßen Polyamide sind insbesondere Adipinsäure, Azelainsäure, Bernsteinsäure, Dodecandisäure, Glutarsäure, Korksäure (Suberinsäure), Maleinsäure, Pimelinsäure, Sebacinsäure, Undecandisäure oder deren Mischungen.

Die Diamin-Komponente besteht im wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten, wobei die aliphatische Kette linear oder leicht verzweigt sein kann. Konkrete Beispiele sind Ethylendiamin, Diethylentriamin, Dipropylentriamin, 1,4-Diaminobutan, 1,3-Pentandiamin, Methylpentandiamin, Hexamethylendiamin, Trimethyl-hexamethylendiamin, 2-(2-aminomethoxy)ethanol, 2-Methypentamethylenediamin, C₁₁-Neopentandiamin, Diaminodipropylmethylamin, 1,12-Diaminododecan. Die besonders bevorzugten aliphatischen Diamine sind C₄-C₁₂-Diamine mit einer geraden Anzahl an C-Atomen.

Die Amino-Komponente kann weiterhin cyclische Diamine oder heterocyclische Diamine enthalten wie zum Beispiel 1,4-Cyclohexandiamin, 4,4'-Diamino-dicyclohexylmethan, Piperazin, Cyclohexan-bis-(methylamin), Isophorondiamin, Dimethylpiperazin, Dipiperidylpropan, Norbornan-diamin oder m-Xylylendiamin.

Wenn das Polyaminoamid eine höhere Flexibilität aufweisen soll, können zusätzlich noch Polyoxyalkylendiamine wie zum Beispiel Polyoxyethylendiamine, Polyoxypropylendiamine oder Bis-(di-aminopropyl)-polytetrahydrofuran mit verwendet werden. Dabei sind die Polyoxyalkylendiamine besonders bevorzugt. Deren Molekulargewicht liegt vorzugsweise zwischen 200 und 4000.

Weiterhin können Aminocarbonsäuren oder deren cyclische Derivate mit verwendet werden. Beispielhaft erwähnt sein hier 6-Aminohexansäure, 11-Aminoundecansäure, Laurolactam,ε-Caprotactam.

Eine weitere Ausführungsform der erfindungsgemäß geeigneten Schmelzklebstoffe enthält als wesentliche Komponente ein Polyamid auf der Basis von dimerisierter Fettsäure. Dimerisierte Fettsäuren werden durch Kupplung von ungesättigten langkettigen einbasischen Fettsäuren, z.B. Linolensäure oder Ölsäure, erhalten. Die Säuren sind seit langem bekannt und im Handel erhältlich.

Die erfindungsgemäß verwendbaren Polyamide sind beispielsweise zusammengesetzt aus
- 35 bis 49,5 Mol-% dimerisierte Fettsäure sowie
- 0,5 bis 15 Mol-% monomere Fettsäure mit 12 bis 22 C-Atomen und
- 2 bis 35 Mol-% Polyetherdiamine der allgemeinen Formel

   H₂N- R⁵ - O- (R⁶O)x - R⁷ - NH₂, (I)

   in der
   - x: eine Zahl zwischen 8 und 80, insbesondere zwischen 8 und 40,
   - R⁵ und R⁷: gleiche oder verschiedene aliphatische und/oder cycloaliphatische Kohlenwasserstoffreste mit vorzugsweise 2 bis 8 C-Atomen
   - R⁶: einen gegebenenfalls verzweigten aliphatischen Kohlenwasserstoffrest mit
   1 bis 6 C-Atomen
   darstellen, sowie
- 15 bis 48 Mol-% aliphatische Diamine mit 2 bis 40 C-Atomen,
   wobei die dimerisierten Fettsäuren bis zu 65 % durch
   aliphatische Dicarbonsäuren mit 4 bis 12 Kohlenstoffatomen ersetzt werden können.

Eine andere geeignete Zusammensetzung ist erhältlich aus
- 20 bis 49,5 Mol-% dimerisierter Fettsäure sowie
- 0,5 bis 15 Mol-% monomere Fettsäure mit 12 bis 22 C-Atomen und
- 20 bis 55 Mol-% eines wenigstens 2 primäre Aminogruppen tragenden Amins mit 2 bis 40 C-Atomen,
wobei die dimerisierten Fettsäuren bis zu 65 % durch
aliphatische Dicarbonsäuren mit 4 bis 12 Kohlenstoffatomen ersetzt sein können.

Bezüglich der Aminkomponenten in den Polyamiden sind bevorzugt Polyetherpolyole mit primären Aminoendgruppen geeignet, wie oben bereits aufgeführt. Dabei sind Polyetherpolyole mit Aminoendgruppen bevorzugt, die nicht oder nur geringfügig wasserlöslich sind. Die eingesetzten Polyetherpolyole mit Aminoendgruppen weisen insbesondere Molekulargewichte zwischen 700 und 2 500 g/mol auf. Eine besonders geeignete Rohstoffklasse sind beispielsweise die Bis-(3-aminopropyl)-polytetrahydrofurane.

Weiterhin können insbesondere auch primäre Alkylendiamine mit 2 bis 10 C-Atomen eingesetzt werden, ausgewählt aus den oben angegebenen Aminen.

Eine weitere geeignete Klasse von Diaminen leitet sich von den Dimerfettsäuren ab und enthält statt der Carboxylgruppen primäre Aminogruppen. Derartige Substanzen werden häufig Dimerdiamine genannt. Sie werden durch Nitrilbildung aus den dimerisierten Fettsäuren und anschließende Hydrierung erhalten.

Als Carbonsäuren sind die oben angeführten aliphatische Dicarbonsäuren einsetzbar. Geeignete aliphatische Carbonsäuren weisen vorzugsweise 4 bis 12 C-Atome auf. Durch diese Säuren kann Dimerfettsäure molmäßig bis zu 65 % ersetzt werden. Weiterhin einsetzbar sind langkettige Aminocarbonsäuren wie 11-Aminoundecansäure oder auch Lauryllactam.

Dabei ist es dem Fachmann bekannt, dass durch Zusatz von Sebacinsäure der Schmelzpunkt der Polyamide in gewissen Grenzen erhöht werden kann. In kleinen Mengen können auch die in der Faserchemie bekannten Polyamid-Rohstoffe wie beispielsweise Caprolactam eingesetzt werden. Diese Stoffe erlauben es dem Fachmann, den Schmelzpunkt in gewissen Grenzen zu erhöhen.

Bei der Auswahl der einzusetzenden monofunktionellen, difunktionellen oder trifunktionellen Rohstoffe ist zu berücksichtigen, dass schmelzbare, d.h. nicht vernetzte Produkte erhalten werden. Beispielsweise kann beim Auftreten von Vernetzungen / Vergelungen durch Absenken des Anteils an trifunktionellen Komponenten (Trimerfettsäuren) und/oder Erhöhen des Gehalts an monofunktionellen Aminen oder Fettsäuren zu Polymeren gelangt werden, die nicht zur Vergelung neigen.

Allgemein werden die Mengen der Amin und der Carbonsäuren so gewählt, dass die Polyamide 1-120 meq Carboxylgruppen pro kg Festkörper aufweisen, insbesondere zwischen 10 bis 100 meq/kg. Alternativ kann auch mit einem Überschuss an Aminen gearbeitet werden. Dann soll ein Amingehalt zwischen 1-140 meq/kg Festköper erhalten werden, insbesondere zwischen 10 bis 100 meq/kg. Das Molekulargewicht (gemessen als zahlenmittleres Molekulargewicht, wie über GPC erhältlich) kann zwischen 30000 bis 300000 g/mol betragen, insbesondere zwischen 50000 bis zu 150000 g/mol. Die Viskosität der Polyamide soll zwischen 5000 bis zu 100000 mPas betragen (gemessen bei 200 °C), insbesondere bis zu 50000 mPas.

Weitere geeignete Systeme können aus Copolymerisaten aus Ethylen und Vinylacetat bestehen. Derartige Copolymerisate sind bekannt und im Handel erhältlich. Vorzugsweise enthalten sie 14-40% Vinylacetat. Der Schmelzindex liegt zwischen 25 und 2500.

Weiterhin können die erfindungsgemäß geeigneten Schmelzklebstoffe weitere übliche Zusätze enthalten. Beispiele dafür sind klebrig machende Harze, wie z.B. Abietinsäure, Abietinsäureester, Terpenharze, Terpenphenolharze oder Kohlenwasserstoffharze; Füllstoffe, z.B. Silikate, Talk, Calciumcarbonate, Tone, Ruß oder Pigmente; Antioxidantien oder Stabilisatoren, z.B. vom Typ der sterisch gehinderten Phenole oder der aromatischen Aminderivate; faserförmige Additive, wie natürliche Fasern, Kunststoff- oder Glasfasern. Die Antioxidantien können dabei in Mengen bis zu 1,5 Gew.% bezogen auf das Polymere eingesetzt werden. Allgemein können diese Zusätze als Summe zu nicht mehr als 15 Gew.-% in einem erfindungsgemäßen Schmelzklebstoff enthalten sein.

Vorzugsweise wählt man den Schmelzklebstoff so, dass er bei einer Temperatur von mindestens 50°C, insbesondere von mindestens 55 °C, jedoch von höchstens 220 °C, insbesondere von höchstens 180 °C aufschmilzt. Insbesondere wird ein Schmelzklebstoff bevorzugt, der oberhalb von 120 °C, insbesondere im Bereich von 130 bis 150 °C aufschmilzt.

Vorzugsweise stimmt man den Schmelzklebstoff so auf den reaktiven Klebstoff ab, dass beide Klebstoffe nach Erstarren bzw. Aushärten eine ähnliche, vorzugsweise eine gleiche Steifigkeit aufweisen. Die beiden Klebstofftypen entsprechen sich dann in der Lastaufnahme bei mechanischer Beanspruchung. Zumindest sollte die Steifigkeit des Schmelzklebstoffs nicht größer sein als diejenige des ausgehärteten reaktiven Klebstoffs, da sonst der Schmelzklebstoff bei Belastung bevorzugt springt. Dies ist zwar für die Festigkeit des Verbundes zwischen erstem und zweitem Bauteil unerheblich, erweckt jedoch bei Inspektion den Eindruck eines "Versagens".

Als reaktiven Klebstoff kann man einen Klebstoff verwenden, wie er bisher im Stand der Technik für entsprechende Verklebungen eines ersten mit einem zweiten Bauteil eingesetzt wird. Beispielsweise kann als reaktiver Klebstoff ein einkomponentiger Polyurethanklebstoff, ein Epoxidharzklebstoff, ein Acrylatkleb- oder -dichtstoff oder ein Siliconkleb- oder -dichtstoff eingesetzt werden. Der reaktive Klebstoff kann auch einen zweikomponentigen Reaktionsklebstoff darstellen.

Ein einziger Körper aus Schmelzklebstoff wird in der Regel nicht ausreichen, das erste Bauteil mit dem zweiten Bauteil hinreichend fest zu verbinden, bevor der reaktive Klebstoff aushärtet. Andererseits ist eine Verwendung von zu vielen Körpern aus Schmelzklebstoff unnötig und unwirtschaftlich. Wie viele Körper aus Schmelzklebstoff man pro erstem Bauteil verwendet, hängt insbesondere von dessen Größe und dessen Gewicht ab und muss ggf. in Vorversuchen festgelegt werden. In der Regel wird es ausreichen, dass man 2 bis 20, vorzugsweise 4 bis 16 Körper aus Schmelzklebstoff mit dem ersten Bauteil verklebt, bevor man dieses mit dem zweiten Bauteil verklebt. Bei sehr großen ersten Bauteilen kann es jedoch auch erforderlich sein, mehr als 20 Körper aus Schmelzklebstoff pro Bauteil einzusetzen. Vorzugsweise bringt man die Körper aus Schmelzklebstoff im Bereich gegenüberliegender Ecken und/oder Kanten des ersten Bauteils auf dieses auf.

Entsprechend der Lehre von EP 1 475 424 A1 können die Körper aus Schmelzklebstoff auf das erste Bauteil aufgeklebt werden, bevor dieses gelagert und/oder transportiert wird. Dies heißt, dass der Hersteller des ersten Bauteils dieses bereits mit den Körpern aus Schmelzklebstoff versehen kann, bevor das erste Bauteil in eine andere Produktionsstätte befördert wird, wo es mit dem zweiten Bauteil verklebt wird. In diesem Falle übernehmen die Körper aus Schmelzklebstoff zusätzlich die Funktion von Abstandshalter, wie es in EP 1 475 424 A1 beschrieben wird.

Im Sinne einer rationellen Fertigung kann es jedoch auch vorzuziehen sein, die Körper aus Schmelzklebstoff erst unmittelbar vor dem Verkleben des ersten Bauteils mit dem zweiten Bauteil auf das erste Bauteil aufzubringen. In dieser Ausführungsform werden die Körper aus Schmelzklebstoff in räumlichem und zeitlichem Zusammenhang mit dem Verkleben des ersten Bauteils mit dem zweiten Bauteil auf das erste Bauteil aufgeklebt. Beispielsweise kann dies dadurch geschehen, dass man das zum Verkleben bereitgestellte erste Bauteil mit einem Handhabungsgerät wie beispielsweise dem Arm eines Roboters greift, danach den oder die Körper aus Schmelzklebstoff auf das erste Bauteil aufklebt (was ebenfalls durch einen Roboter erfolgen kann) und anschließend mit dem selben Handhabungsgerät das erste Bauteil ohne zwischenzeitliches Ablegen mit dem zweiten Bauteil in Kontakt bringt. Das Aufkleben der Schmelzklebstoff-Körper auf das erste Bauteil und das Verkleben des ersten Bauteils mit dem zweiten Bauteil geschieht also in quasi einem Produktionsschritt mit Hilfe desselben Roboters. Selbstverständlich wird der reaktive Klebstoff ebenfalls innerhalb dieses Produktionsschritts entweder auf das erste Bauteil oder auf das zweite Bauteil oder in den Spalt zwischen erstem und zweitem Bauteil aufgetragen.

Eine Ausführungsform des erfindungsgemäßen Verfahrens ist dadurch gekennzeichnet, dass das zweite Bauteil zumindest im Randbereich metallisch ist und der Randbereich lokal an mindestens einer Stelle, an der beim Verkleben des ersten Bauteils der aufgebrachte Körper aus Schmelzklebstoff in Kontakt mit dem Randbereich kommt, unmittelbar durch elektromagnetische Induktion erwärmt wird. Hierzu lässt man ein magnetisches Wechselfeld auf die zu erwärmenden Stellen des Randbereichs einwirken.

In einer alternativen Ausführungsform hierzu geht man so vor, dass der Randbereich des zweiten Bauteils lokal an mindestens einer Stelle, an der beim Verkleben des ersten Bauteils der aufgebrachte Körper aus Schmelzklebstoff in Kontakt mit dem Randbereich kommt, mittelbar durch elektromagnetische Induktion erwärmt wird, indem man mindestens ein mindestens teilweise metallisches Heizelement durch elektromagnetische Induktion erwärmt und mit dem Randbereich in Kontakt bringt.

In dieser Ausführungsform wirkt also das magnetische Wechselfeld, das die elektromagnetische Induktion bewirkt, nicht unmittelbar auf den Randbereich des zweiten Bauteils ein, um dieses zu erwärmen. Daher ist diese Ausführungsform nicht nur für zweite Bauteile mit einem metallischen Randbereich, sondern auch für nichtmetallische zweite Bauteile geeignet. In dieser Ausführungsform lässt man das magnetische Wechselfeld nicht auf den Randbereich des zweiten Bauteils direkt einwirken, sondern statt dessen auf ein getrenntes Heizelement, das zumindest teilweise metallisch ist. Beispielsweise kann dieses Heizelement ein Kunststoffbolzen darstellen, der zumindest an derjenigen Seite, die mit dem zweiten Bauteil in Kontakt gebracht wird, mit einer Metallfolie versehen ist. Diese Metallfolie wird induktiv erwärmt und auf den Randbereich des Bauteils aufgesetzt.

Hierbei kann eine Vorrichtung analog derjenigen verwendet werden, die in der deutschen Gebrauchsmusterschrift DE 203 00 624 U1 näher beschrieben ist. In diesem Dokument wird eine Vorrichtung beschrieben, die ein so genanntes "Handteil" aufweist, das eine Induktionseinrichtung darstellt oder enthält. Für das erfindungsgemäße Verfahren wandelt man diese Einrichtung vorzugsweise so ab, dass man ein oder mehrere diesem "Handteil" entsprechende Heizeinrichtungen vorsieht, die an dem Handhabungsgerät für das Ein-oder Aufsetzen des ersten Bauteils angebracht werden. Dabei kann für die erste Verfahrensvariante das Heizelement eine elektromagnetische Induktionseinrichtung darstellen, mit deren Hilfe der metallische Randbereich des zweiten Bauteils unmittelbar durch elektromagnetische Induktion von Strömen aufgeheizt wird. In der zweiten Ausführungsform enthält das Heizelement ebenfalls eine Einrichtung zur elektromagnetischen Induktion. Zusätzlich enthält das Heizelement ein metallisches Element, das durch die elektromagnetische Induktion erwärmt wird und das seinerseits zum lokalen Erwärmen des Randbereichs des zweiten Bauteils eingesetzt wird, indem man das metallische Element mit dem Randbereich des zweiten Bauteils in Kontakt bringt. In diesem Fall sieht man vorzugsweise einen nichtmetallischen elastischen Bolzen vor, der beispielsweise aus Silikon bestehen kann, auf dessen dem Substrat zugewandten Stirnseite eine Metallfolie aufgebracht ist. Diese Metallfolie erwärmt sich durch die elektromagnetische Induktion. Beim Aufsetzen auf das zu erwärmende Substrat passt sich der Bolzen aufgrund seiner Elastizität gut der Substratoberfläche an, so dass auch leicht gewölbte Substrate lokal erwärmt werden können. Diese Verfahrensweise kann insbesondere dafür verwendet werden, den Schmelzklebstoffkörper mit einem nichtmetallischen ersten oder zweiten Bauteil zu verkleben. Beispielsweise kann auf diese Weise der Schmelzklebstoffkörper auf eine Glasscheibe aufgesetzt werden, bevor diese mit einem metallischen Randbereich eines zweiten Bauteils verklebt wird.

Zweckmäßigerweise weist das Handhabungsgerät, das das erste Bauteil auf das zweite Bauteil auf- oder in dieses einsetzt, eine oder mehrere Heizeinrichtungen auf, mit denen im Schritt b) der Randbereich des zweiten Bauteils lokal an mindestens einer Stelle, an der beim Verkleben des ersten Bauteils der aufgebrachte Körper aus Schmelzklebstoff in Kontakt mit dem Randbereich kommt, mittelbar oder unmittelbar durch elektromagnetische Induktion erwärmt werden kann. Vorzugsweise enthält das Handhabungsgerät so viele Heizeinrichtungen, wie Schmelzklebstoff-Körper auf dem ersten Bauteil aufgeklebt sind. Das selbe Handhabungsgerät, das das erste Bauteil auf das zweite Bauteil auflegt oder in dieses einlegt, wird also auch dafür verwendet, den Randbereich des zweiten Bauteils an denjenigen Stellen, an denen die Körper aus Schmelzklebstoff aufgesetzt werden, unmittelbar vor dem Herstellen des Kontakts induktiv zu erwärmen. Durch diese integrierte Verfahrensweise sind besonders kurze Taktzeiten möglich, da nur kleine Materialbereiche erwärmt werden müssen.

Das erfindungsgemäße Verfahren ist nicht auf bestimmte erste und zweite Bauteile beschränkt. Beispielsweise kann das erste Bauteil eine Glas- oder Kunststoffscheibe, insbesondere eine Scheibe eines Fahrzeugs darstellen. Das erfindungsgemäße Verfahren ist also insbesondere für die Direktverglasung von Fahrzeugen geeignet. Weiterhin kann das erste Bauteil ein Kunststoff- oder Holzpaneel darstellen. Auch können das erste und das zweite Bauteil jeweils ein Blech darstellen, die vor dem Anbringen einer Bördelnahtverklebung aus einem reaktiven Klebstoff vorfixiert werden sollen. Beispielsweise kann dies zum Herstellen einer Fahrzeugtür erfolgen.

Das zweite Bauteil kann ganz allgemein ein Rohbau oder Rohbauteil einer architektonischen Struktur, eines Möbelstücks, eines Geräts wie beispielsweise einer Haushalts- oder Industriemaschine oder eines Fahr- oder Flugzeugs oder eines Schiffs darstellen.

Die erfindungsgemäße Verfahrensweise kann im Vergleich zum Stand der Technik die Produktionsgeschwindigkeit erhöhen. Sie verbessert die Präzision der Verklebung von erstem mit zweitem Bauteil, da sich durch besser steuerbares Aufschmelzen des Schmelzklebstoffs nur im zu verklebenden Randbereich die Fertigungstoleranzen verringern.

## Patentansprüche

1. Verfahren zum Verkleben eines ersten Bauteils mit einem zweiten Bauteil, das einen Randbereich aufweist, mit dem überlappend das erste Bauteil verklebt wird, wobei man
a) mindestens einen Körper aus einem Schmelzklebstoff so mit dem ersten Bauteil verklebt, dass er beim Verkleben des ersten Bauteils mit dem zweiten Bauteil in Kontakt mit dem Randbereich kommt,
b) den Randbereich lokal an mindestens einer Stelle, an der beim Verkleben des ersten Bauteils der aufgebrachte Körper aus Schmelzklebstoff in Kontakt mit dem Randbereich kommt, mittelbar oder unmittelbar durch elektromagnetische Induktion auf eine Temperatur erwärmt, die oberhalb der Schmelztemperatur des Schmelzklebstoffs liegt,
c) das erste Bauteil so mit dem Randbereich des zweiten Bauteils kontaktiert, dass der Körper des Schmelzklebstoffs in Kontakt mit der im Schritt b) erwärmten Stelle des Randbereichs kommt, so dass der Schmelzklebstoff an der Kontaktstelle mit dem Randbereich aufschmilzt und nach Abkühlen das erste Bauteil mit dem Randbereich des zweiten Bauteils verbindet,
d) wobei man zusätzlich vor dem Schritt b) oder nach dem Schritt c) einen reaktiven Klebstoff so zwischen das erste und das zweite Bauteil einbringt, dass er das erste Bauteil mit dem Randbereich des zweiten Bauteils verbindet, und
e) den reaktiven Klebstoff aushärtet oder aushärten lässt.

2. Verfahren nach Anspruch 1, **dadurch gekennzeichnet, dass** man als Schritt d) den reaktiven Klebstoff vor dem Schritt b) so auf das erste Bauteil aufträgt, dass er beim Verkleben des ersten Bauteils mit dem zweiten Bauteil im Schritt c) in Kontakt mit dem Randbereich des zweiten Bauteils kommt.

3. Verfahren nach Anspruch 1, **dadurch gekennzeichnet, dass** man als Schritt d) den reaktiven Klebstoff vor dem Schritt b) so auf den Randbereich des zweiten Bauteils aufträgt, dass er beim Verkleben des ersten Bauteils mit dem Randbereich des zweiten Bauteils mit dem ersten Bauteil in Kontakt kommt, wobei diejenigen Stellen des Randbereichs frei von reaktivem Klebstoff bleiben, die im nachfolgenden Schritt c) mit dem Körper aus Schmelzklebstoff in Kontakt kommen.

4. Verfahren nach Anspruch 1, **dadurch gekennzeichnet, dass** man als Schritt d) den reaktiven Klebstoff nach dem Schritt c) in einen Spalt zwischen dem ersten Bauteil und dem Randbereich des zweiten Bauteils einbringt.

5. Verfahren nach einem oder mehreren der Ansprüche 2 bis 4, **dadurch gekennzeichnet, dass** man den reaktiven Klebstoff in Form einer Klebstoffraupe aufträgt oder einbringt.

6. Verfahren nach einem oder mehreren der Ansprüche 1 bis 5, **dadurch gekennzeichnet, dass** der Körper aus einem Schmelzklebstoff so geformt ist, dass er zwei zumindest angenähert parallele Flächen aufweist, wobei die erste der parallelen Flächen mit dem ersten Bauteil und die zweite der parallelen Flächen mit dem Randbereich des zweiten Bauteils in Kontakt kommt.

7. Verfahren nach Anspruch 6, **dadurch gekennzeichnet, dass** der Körper aus einem Schmelzklebstoff die Form einer runden oder mehreckigen Scheibe oder Säule aufweist.

8. Verfahren nach einem oder mehreren der Ansprüche 1 bis 7, **dadurch gekennzeichnet, dass** der Schmelzklebstoff eine oder mehrere der folgenden Komponenten enthält oder hieraus besteht: Polyolefin, Ethylen-Vinylacetat-Copolymer, Ethylen-Ethylacrylat-Copolymer, Polyamid, Polyester, Polyurethan, Butadien-Styrol-Blockpolymer.

9. Verfahren nach einem oder mehreren der Ansprüche 1 bis 7, **dadurch gekennzeichnet, dass** der Schmelzklebstoff eine oder mehrere der folgenden Komponenten enthält oder hieraus besteht:
Cycloaliphatisches Kohlenwasserstoffharz,
Copolymer von Styrol mit Isopren und/oder α-Methylstyrol, das gegebenenfalls hydriert sein kann,
hydriertes Polydecen,
Copolymer vom Maleinsäureanhydrid mit Ethylen und/oder Propylen.

10. Verfahren nach einem oder mehreren der Ansprüche 1 bis 9, **dadurch gekennzeichnet, dass** der Schmelzklebstoff bei einer Temperatur von mindestens 50 °C, insbesondere von mindestens 55°C, jedoch von höchstens 220 °C, insbesondere von höchstens 180°C aufschmilzt.

11. Verfahren nach einem oder mehreren der Ansprüche 1 bis 10, **dadurch gekennzeichnet, dass** der reaktive Klebstoff ein einkomponentiger Polyurethanklebstoff, ein Epoxidharzklebstoff, ein Acrylatkleb- oder -dichtstoff oder ein Siliconkleb- oder dichtstoff oder ein zweikomponentiger Reaktivklebstoff ist.

12. Verfahren nach einem oder mehreren der Ansprüche 1 bis 11, **dadurch gekennzeichnet, dass** man 2 bis 20, vorzugsweise 4 bis 16 Körper aus Schmelzklebstoff mit dem ersten Bauteil verklebt, bevor man das erste Bauteil mit dem zweiten Bauteil verklebt.

13. Verfahren nach einem oder mehreren der Ansprüche 1 bis 12, **dadurch gekennzeichnet, dass** das erste Bauteil nach dem Verkleben des oder der Körper aus Schmelzklebstoff und vor dem Verkleben mit dem zweiten Bauteil gelagert und/oder transportiert wird.

14. Verfahren nach einem oder mehreren der Ansprüche 1 bis 12, **dadurch gekennzeichnet, dass** man das erste Bauteil mit einem Handhabungsgerät greift, danach den oder die Körper aus Schmelzklebstoff auf das erste Bauteil aufklebt und anschließend mit demselben Handhabungsgerät das erste Bauteil ohne zwischenzeitliches Ablegen mit dem zweiten Bauteil in Kontakt bringt.

15. Verfahren nach Anspruch 14, **dadurch gekennzeichnet, dass** das Handhabungsgerät eine oder mehrere Heizeinrichtungen aufweist, mit denen im Schritt b) der Randbereich des zweiten Bauteils lokal an mindestens einer Stelle, an der beim Verkleben des ersten Bauteils der aufgebrachte Körper aus Schmelzklebstoff in Kontakt mit dem Randbereich kommt, mittelbar oder unmittelbar durch elektromagnetische Induktion erwärmt werden kann.

16. Verfahren nach einem oder mehreren der Ansprüche 1 bis 15, **dadurch gekennzeichnet, dass** das zweite Bauteil zumindest im Randbereich metallisch ist und der Randbereich lokal an mindestens einer Stelle, an der beim Verkleben des ersten Bauteils der aufgebrachte Körper aus Schmelzklebstoff in Kontakt mit dem Randbereich kommt, unmittelbar durch elektromagnetische Induktion erwärmt wird.

17. Verfahren nach einem oder mehreren der Ansprüche 1 bis 15, **dadurch gekennzeichnet, dass** der Randbereich des zweiten Bauteils lokal an mindestens einer Stelle, an der beim Verkleben des ersten Bauteils der aufgebrachte Körper aus Schmelzklebstoff in Kontakt mit dem Randbereich kommt, mittelbar durch elektromagnetische Induktion erwärmt wird, indem man mindestens ein mindestens teilweise metallisches Heizelement durch elektromagnetische Induktion erwärmt und mit dem Randbereich in Kontakt bringt.

18. Verfahren nach einem oder mehreren der Ansprüche 1 bis 17, **dadurch gekennzeichnet, dass** das erste Bauteil eine Glas- oder Kunststoffscheibe oder ein Kunststoff- oder Holzpaneel darstellt.

19. Verfahren nach einem oder mehreren der Ansprüche 1 bis 18, **dadurch gekennzeichnet, dass** das zweite Bauteil ein Rohbau oder Rohbauteil einer architektonischen Struktur, eines Möbelstücks, eines Geräts oder eines Fahr- oder Flugzeugs oder eines Schiffs darstellt.
